(19) Europäisches Patentamt
European Patent Office
Office européen des brevets

(11) Numéro de publication: 0 128 074
B1

(12) # FASCICULE DE BREVET EUROPÉEN

(45) Date de publication du fascicule du brevet: 03.09.86

(51) Int. Cl.⁴: C 01 B 31/18

(21) Numéro de dépôt: 84400995.1

(22) Date de dépôt: 16.05.84

(54) **Procédé pour l'obtention de monoxyde de carbone à partir d'une source carbonée par réduction par l'hydrogène et dispositif pour sa mise en oeuvre et application.**

(30) Priorité: 20.05.83 FR 8308392

(43) Date de publication de la demande: 12.12.84 Bulletin 84/50

(45) Mention de la délivrance du brevet: 03.09.86 Bulletin 86/36

(84) Etats contractants désignés: AT BE CH DE FR GB IT LI LU NL SE

(56) Documents cité:
US-A-1 719 867
US-A-1 740 139

L'ACTUALITE CHIMIQUE, janvier 1982, Paris (FR); Y. SCHWOB:"Fabrication du méthanol. La rétroconversion du gaz carbonique, filière d'avenir", pages 28-30

(73) Titulaire: RHONE- POULENC CHIMIE DE BASE, 25, quai Paul Doumer, F-92408 Courbevoie (FR)

(72) Inventeur: Bernard, Philippe, 71, rue Belliard, F-75018 Paris (FR)
Inventeur: Prudhon, Francois, 2, rue Delaunay, F-78000 Versailles (FR)

(74) Mandataire: Martin, Henri, RHONE- POULENC INTERSERVICES Service Brevets Chimie 25, quai Paul Doumer, F-92408 Courbevoie Cédex (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 128 074 B1

LIBER, STOCKHOLM 1986

**Description**

La présente invention a pour objet un procédé pour l'obtention d'oxyde de carbone à partir d'une source carbonée, par réduction par l'hydrogène et en particulier, la réalisation de mélanges gazeux renfermant de l'hydrogène et de l'oxyde de carbone. Elle concerne également un dispositif pour sa mise en oeuvre, et son application.

On sait que de tels mélanges sont d'un intérêt commercial et technique considérable. Depuis environ trois décennies l'on s'est efforcé de réaliser des combustibles synthétiques. Mais ces mélanges gazeux peuvent également être utiles dans les procédés chimiques, comme la synthèse de l'ammoniac, la synthèse du méthanol, les synthèses de type Fischer-Tropsch etc... comme il est rappelé en 1963 dans l'US 3 479 149.

Vingt ans après, l'intérêt d'une telle transformation n'a pas diminué, bien au contraire, tant dans le domaine des gaz de synthèse (ou syngas), que dans le domaine des carburants synthétiques (synfuels). Cette réduction permet en effet de valoriser de l'hydrogène, de l'oxygène et du $CO_2$, sachant en particulier que, par ce biais, on peut "stocker" de l'énergie sous forme liquide. Ceci est très important, car à l'heure actuelle, on ne sait pas, ou mal, conserver l'énergie électrique. Un moyen consiste à électrolyser de l'eau et à récupérer l'hydrogène et l'oxygène, et réutiliser ces produits dans une conversion conduisant à un carburant.

$$CO_2 + H_2 \rightleftharpoons CO + H_2O$$

été mise en oeuvre depuis longtemps dans le but de produire du monooxide de carbone. (US 1719 867 - US 1740 139).

En dépit de nombreux travaux qui ont conduit à une litterature importante, et au dépôt de brevets, l'on doit dire que la réaction:

$$CO_2 + H_2 \longrightarrow CO + H_2O$$

est conduite en milieu catalytique par exemple silicoaluminate (US 3 479 149) oxyde ferrique (FR 2.295.118), Fe, Ni, Co et leurs alliages (demande japonaise 77 88 597), carbonate de potassium (CA Vol. 92, 1980, page 136, 92-166174j), complexes du rhodium (CA, Vol. 94, 1981, page 441, 94-128092q).

On a aussi considéré qu'un garnissage inerte était suffisant pour conduire à bien cette réaction (Actualité Chimique - Janvier 1982 - p. 29). On a également fait appel à un plasma ou à une décharge luminescente (voir par exemple CA Vol. 87, 1977, page 135, 87-119989r).

On peut selon l'une ou l'autre voie, en jouant sur les températures, les pressions, la nature des catalyseurs, aller jusqu'à la formation d'hydrocarbures, voir par exemple FR 2.295.118 dejà cité. On peut également préparer le méthane à partir de $CO_2$ par décharge luminescente en présence de Fe pour obtenir de l'oxyde de carbone, puis réduction en présence d'un catalyseur Co-$ZrO_2$-MgO- kieselguhr, à 190°C pour donner du méthane. (CA Vol. 90, 1979, p. 537, 90 - 103291 h).

Ce rappel qui ne prétend pas être exhaustif montre que cette réduction n'est pas facile à maitriser. Même en faisant appel à un brûleur à plus de 600°C, l'on a mis en oeuvre un catalyseur (CA Vol. 90, 1979, page 140, 90 - 189269s).

On sait que le taux de conversion de $CO_2$ en CO est faible dans le domaine des températures habituelles de catalyse, quel que soit le mode de mise en oeuvre du catalyseur (lit fixe, fluidisé, entraîné etc...), ce défaut étant accentué dans le cas du lit fluidisé du fait du court-circuit par les bulles.

Cet inconvénient, en l'occurrence, s'ajoute aux défauts classiques des catalyseurs (tenue dans le temps, à la température, corrosion, impuretés, coût...).

On a déjà proposé d'effectuer cette réaction à une température supérieure à 800°C, en présence d'un garnissage chimiquement inerte (Actualité Chimique - Janvier 82 - p. 29).

Mais ce moyen présente plusieurs inconvénients:

- le caractère chimiquement inerte du garnissage ne peut être conservé qu'autant que les réactifs ne transportent aucune substance active susceptible de se déposer sur ledit garnissage et qu'aucune substance active ne se forme au cours de réactions secondaires,
- de plus, le garnissage n'est homogène en température qu'autant qu'il est chauffé par une réaction exothermique équirépartie. Il est connu qu'un tel remplissage présente des profils de températures tant radial que longitudinal avec point chaud vers le centre et des zones refroidies au voisinage de la périphérie si la chaleur nécessaire est créée "in situ", ces profils de températures étant inversés, dans le cas où la chaleur est fournie à travers les parois. La section de passage correspondant aux zones annulaires proches de la paroi étant très grande, une grande partie du débit gazeux se trouve donc dans des conditions de températures différentes de celles qui règnent dans le volume principal de l'appareil, ce qui correspond à des états d'avancement des équilibres différents et à des réactions secondaires possibles décrites ci-après.

De plus ce profil de températures est particulierement préjudiciable au moment du démarrage et plus généralement de toute variation de régime, ce qui peut se traduire par des dépôts de suie.

En effet, on sait que pour une température inférieure à 800°C, le CO éventuellement formé se dégrade en produits indésirables (par exemple carbone, réaction de BOUDOUARD).

Ceci implique que la réaction soit conduite à une température supérieure à 800°C et en phase homogène gazeuse. Mais on a en outre prétendu qu'il fallait que cette température dépasse 1300°C pour observer une vitesse appréciable de l'évolution de l'équilibre. Par ailleurs, le calcul montre qu'au-delà d'une température de l'ordre de 1200°C, l'énergie nécessaire à l'accroissement du taux de conversion du $CO_2$ en CO devient redhibitoire, ce qui enlève beaucoup d'intérêt au procédé faisant appel à un plasma ou à une décharge luminescente.

Mais porter un gaz à plus de 800°C (et a fortiori à plus de 1300°C) par chauffage indirect présente des difficultés technologiques bien connues (diffusion de l'hydrogène, fragilisation ou carburation des alliages métalliques, etc...) et suppose une source chaude à température nettement supérieure à celle du gaz (rendement thermique et tenue des matériaux).

On pourrait penser que ceci doive orienter vers des réacteurs où les produits réagissent et se transportent uniquement en phase gazeuse, mais parmi les problèmes qui se posent alors, on peut citer ceux de la mise en contact des réactifs, du transfert de masse et de chaleur. La mise en contact des réactifs doit être assurée par un mélange rapide à très haute température pour éviter les dégradations locales et transitoires. Mais en particulier, d'un point de vue technologique, l'on a intérêt à utiliser un réacteur à paroi refroidie, c'est-à-dire avec une température de paroi inférieure à la limite de tolérance des aciers classiques (800°C), alors que la température de réaction est généralement bien supérieure. Ce réacteur, néanmoins, ne doit pas présenter le défaut déjà signalé de refroidissement localisé des gaz par sa paroi. Il doit donc présenter un rapport surface/volume très faible (pas de garnissage) et permettre une forte production par unité de volume.

En conséquence, porter le mélange des réactifs à de telles températures de façon très rapide et homogene, en température et composition, implique une génération de chaleur "in situ".

Pour cela on a pensé utiliser la technologie des moteurs-fusées, en maintenant une couche limite d'hydrogène n'ayant pas réagi le long des parois de la zone de réaction. Mais ceci est contradictoire avec les exigences d'un milieu le plus homogène possible.

Un réacteur idéal consisterait en un réacteur qui, à la fois, présenterait une paroi relativement froide et une température du milieu de réaction identique à la température théorique.

L'objet de la présente invention est précisément de répondre à tous ces problèmes.

Les travaux de la demanderesse ont montré qu'il était possible de conduire la réaction à une température comprise entre 800°C et 1300°C tout en conservant une vitesse appréciable d'atteinte de l'équilibre.

La procédé selon l'invention pour l'obtention d'oxyde de carbone à partir d'une source carbonée par réduction par l'hydrogène selon lequel on introduit une source carbonée, de l'hydrogène et de l'oxygène dans une première zone A par combustion in situ, à une température d'au moins 800°C en évitant la formation d'oxydes de carbone en-dessous de 800°C caractérisée par le fait que l'on réalise un micro-mélange des réactifs en formant un écoulement hélicoïdal symétrique amené sous forme gazeuse et les autres réactifs à l'intérieur de la zone délimitée par l'écoulement hélicoïdal, puisque l'on provoque un refroidissement brutal dans une deuxième zone B par l'introduction d'un liquide froid de manière à bloquer l'évolution de l'équilibre dans cette zone B et à maintenir ainsi les gaz dans la composition atteinte à la sortie de la zone A.

La source carbonée peut être constituée par de l'anhydride carbonique et/ou un hydrocarbure tel que le méthane et/ou du charbon.

On peut introduire dans la zone A d'autres composés tels que vapeur d'eau, azote etc...

Le combustible peut être constitué soit par de l'hydrogène introduit en excès, soit par une source carbonée.

La combustion de certaines sources carbonées comme le méthane étant très exothermique, on peut introduire du $CO_2$ dans la zone A qui remplit la fonction de diluant thermique, tout en jouant son rôle dans l'équilibre

$$CO_2 + H_2 \rightleftharpoons CO + H_2O$$

Dans le cas où la source de $CO_2$ n'est pas susceptible de fournir la chaleur suffisante, in situ, par exemple si la source de $CO_2$ est le $CO_2$ lui-même, l'on introduit un excès d'hydrogène par rapport au $CO_2$ excès qui est brûlé "in situ".

Le fluide froid injecté à l'entrée de la zone B peut être constitué par de l'eau qui présente, d'une part l'avantage de faire partie du système, et d'autre part, celui d'assurer un apport important de frigories. Mais on ne sortirait pas du cadre de la présente invention en faisant appel à un autre fluide.

On peut préchauffer le ou les gaz à l'entrée de la zone A.

On peut également réaliser un recyclage dans la zone A du $CO_2$ sortant du réacteur.

Selon une forme de réalisation préférentielle de l'invention, on forme un écoulement hélicoïdal symétrique avec au moins l'un des réactifs gazeux, et l'on introduit l'autre (ou les autres) réactif(s) à l'intérieur de la zone délimitée par l'écoulement hélicoïdal symétrique, l'on amorce la réaction grâce à un moyen d'allumage et l'on soumet le milieu réactionnel à une trempe brutale à la sortie de l'écoulement hélicoïdal symétrique.

Avantageusement, si la matière carbonée est constituée par du $CO_2$, le mélange $CO_2 + H_2$ sert à former la

phase hélicoïdale.

On s'aperçoit alors que, de manière inattendue, la température et la composition du gaz sortant de la zone A correspondent sensiblement aux valeurs de l'équilibre thermodynamique correspondant aux débits d'alimentation de ladite zone A. Inattendue parce que, comme déjà signalé, les vitesses d'évolution de cet équilibre sont réputées devenir quasi nulles en-dessous de 1300° C.

Pour des raisons technologiques connues on a intérêt à mettre en oeuvre des dispositifs à faibles temps de sejour dans des matériaux les moins sophistiqués possibles.

Selon l'invention on peut atteindre 75 % de l'équilibre dans l'intervalle 800-1300° C avec un temps de passage de moins de 1/10s et 85 % avec un temps de passage de au plus 1 sec.

- Par temps de passage dans la zone A, on entend le quotient du volume de ladite zone A par le débit volumique dans les conditions de température et de pression régnant dans cette zone.

- Par pourcentage de l'equilibre, on entend le rapport:

$$100 \frac{\text{CO formé}}{\text{CO théorique}},$$

CO théorique étant la quantité de CO qui serait formée si on atteignait l'équilibre dans les mêmes conditions de température dans la zone A.

La pression sur les gaz introduits peut être faible, inférieure à $10^5$ Pa. mesurés par rapport à la pression régnant en aval du système, lorsque cette pression est voisine de la pression atmosphérique.

Mais on ne sortirait pas du cadre de la présente invention en mettant en oeuvre des pressions plus élevées dans le but de faire fonctionner le réacteur sous pression, notamment dans le cas où, en raison d'une opération devant se situer en aval, on a besoin de gaz sous pression.

Un réacteur selon l'invention peut en particulier être conforme au dispositif illustré à la figure 1 ci-annexée. Il comprend une enceinte tubulaire (1), une chemise perforée (2) définissant un espace annulaire (3), un convergent définissant un passage restreint (4), un moyen d'introduction (5) d'une phase fluide telle que l'eau dans la zone du passage restreint, une chambre (6), au moins une entrée tangentielle (7) débouchant dans l'espace annulaire (3), au moins une autre entrée, tangentielle ou non (8), et un moyen d'allumage (9).

Selon l'invention, le mélange $H_2 + CO_2$ est introduit tangentiellement par le conduit (7), de manière à former, après traversée de la chemise perforée, un ecoulement hélicoïdal symétrique. L'oxygène est introduit par le conduit (8) et l'eau par le conduit (5).

Les gaz issus de la zone (B) sont lavés et récupérés en vue des opérations ultérieures.

La composition du mélange gazeux sortant de la zone (B) peut être réglée selon son utilisation er en particulier selon que l'on désire obtenir ulterieurement un combustible synthétique ou un gaz synthétique.

Dans le premier cas, l'on vise notamment le stockage de l'énergie électrique sous forme liquide, alors que dans le second cas, on est intéressé par des produits de synthèse.

Mais la présente invention sera plus aisément comprise à l'aide des exemples suivants donnés à titre illustratif mais nullement limitatif.

Le dispositif utilisé est celui décrit précédemment et illustré par la figure 1 ci-annexée.

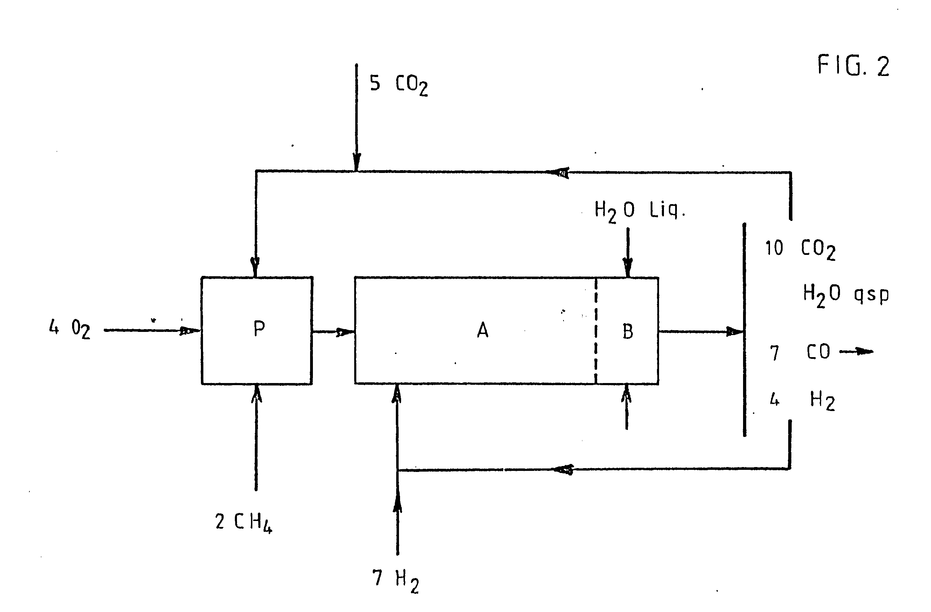

La figure 2 représente un bilan selon l'invention.

**EXEMPLES**

Dans les exemples suivants, la température de sortie zone B est de 80° C.

**EXEMPLE 1:**

constitue l'essai de référence ou le rapport $H_2/CO_2$, (déduction faite de l'hydrogène consommé par l'oxygène présent) est voisin de 1.

**EXEMPLE 2:**

marque l'influence du temps de passage moyen, ce dernier ayant été reduit d'environ 35 % par rapport à l'essai de base N° 1.

**EXEMPLE 3:**

est effectué avec un excès de l'ordre de 45 % en $H_2$ par rapport au $CO_2$ (l'hydrogène consommé par l'oxygène n'étant pas pris en compte).

**EXEMPLE 4:**

est effectué avec un excès de l'ordre de 45 % en $CO_2$ par rapport à $H_2$, non tenu compte de l'hydrogène consommé par l'oxygène.

**EXEMPLE 5:**

est réalisé à une température iniérieure pour laquelle le temps de passage imposé par l'appareillage n'est pas suffisant pour atteindre l'équilibre thermodynamique.

**EXEMPLE 6:**

la figure 2 représente un bilan théorique exprimé en moles où le combustible est un précurseur de $CO_2$, en l'occurrence $CH_4$.

Dans une zone préliminaire P à 1500°C, la combustion stoechiométrique du combustible a été réalisée, le $CO_2$ jouant dans cette zone le rôle de diluant thermique. Les gaz chauds issus de cette zone ($H_2O + CO_2$) ont été rentrés dans la zone A du dispositif schématisé sur la figure 1 où ile ont réagi (à 1050°C) avec l'hydrogène pour donner les produits de la réaction. Les gaz issus de la zone A subissent une trempe rapide dans la zone B d'où ils sortent saturés en vapeur d'eau (d'où la notation qsp - quantite suffisante pour-).

**REMARQUE**

Ces exemples illustrent l'intérêt de la présente invention. On sait en effet que le gaz de synthèse répond à la composition $nCO + mH_2$ et que selon la synthèse à réaliser, on doit ajuster les valeurs de n et m. Ainsi à titre d'exemple:

- synthèse de Fischer-Tropsch classique en vue de combustibles pour moteur $n = 1$, $m = 2$.
- synthèse de Fischer-Tropsch modifiée pour oléfines en $C_2$ - $C_4$ $n = 1$, $m = 1,5$.
- synthèse de méthanol $n = 1$, $m = 2$.
- synthèse de l'éthylène glycol $n = 1$, $m = 1,5$.

Par le procédé de l'invention, on peut obtenir facilement des rapports m/n compris entre 1 et 1,5. Pour des rapports plus élevés, (m/n = 2), il suffit d'ajouter de l'hydrogène qui constitue un des gaz de départ, le veritable problème étant la réduction du $CO_2$. De cette manière en particulier on peut donc réaliser un "stockage" de l'énergie électrique sous forme liquide.

**EXEMPLE 1**

| EXEMPLE I | | | |
|---|---|---|---|
| Molaire % | Entrée | SORTIE | |
| | | Mesurée après trempe | Théorique avant trempe |
| $H_2$ | 54,5 | 31,3 | 30,3 |
| $CO_2$ | 34,8 | 34,5 | 33,6 |
| $O_2$ | 10,7 | 0,06 | 0,06 |
| $N_2$ | 0,04 | 0,09 | 0,09 |
| CO | | 34,0 | 35,9 |
| Conversion de $CO_2$ | | 49,64 | 51,66 |
| % par rapport à l'équilibre | | 96,1 | |
| Température théorique | | 1260 | |
| Temps de passage moyen dans la zone A | | $1,67\ 10^{-2}$ s | |
| $H_2$ / CO (molaire) | | 0,92 | |

**EXEMPLE 2**

| EXEMPLE 2 | | | |
|---|---|---|---|
| Molaire % | Entrée | SORTIE | |
| | | Mesurée après trempe | Théorique avant trempe |
| $H_2$ | 55,6 | 32,5 | 31,7 |
| $CO_2$ | 33,2 | 32,2 | 31,4 |
| $O_2$ | 11,1 | 0,04 | 0,04 |
| $N_2$ | 0,04 | 0,07 | 0,07 |
| CO | | 35,1 | 36,9 |
| Conversion de $CO_2$ | | 52,12 | 54,03 |
| % par rapport à l'équilibre | | 96,5 | |
| Température théorique | | 1334 | |
| Temps de passage moyen dans la zone A | | 1,08 $10^{-2}$ s | |
| $H_2$ / CO (molaire) | | 0,93 | |

**EXEMPLE 3**

| EXEMPLE 3 | | | |
|---|---|---|---|
| Molaire % | Entrée | SORTIE | |
| | | Mesurée après trempe | Théorique avant trempe |
| $H_2$ | 61,2 | 45,3 | 44,5 |
| $CO_2$ | 28,7 | 21,7 | 21,1 |
| $O_2$ | 10,1 | 0,07 | 0,07 |
| $N_2$ | 0,04 | 0,08 | 0,08 |
| CO | | 32,9 | 34,2 |
| Conversion de $CO_2$ | | 60,31 | 61,85 |
| % par rapport à l'équilibre | | 97,5 | |
| Température théorique | | 1226 | |
| Temps de passage moyen dans la zone A | | $1,63\ 10^{-2}$ s | |
| $H_2$ / CO (molaire) | | 1,38 | |

**EXEMPLE 4**

| EXEMPLE 4 | | | |
|---|---|---|---|
| Molaire % | Entrée | SORTIE | |
| | | Mesurée après trempe | Théorique avant trempe |
| $H_2$ | 48,5 | 22,1 | 20,7 |
| $CO_2$ | 41,2 | 46,9 | 45,4 |
| $O_2$ | 10,2 | 0,04 | 0,04 |
| $N_2$ | 0,06 | 0,11 | 0,11 |
| CO | | 30,8 | 33,8 |
| Conversion de $CO_2$ | | 39,66 | 41,46 |
| % par rapport à l'équilibre | | 95,2 | |
| Température théorique | | 1174 | |
| Temps de passage moyen dans la zone A | | 1,06 $10^{-2}$ s | |
| $H_2$ / CO (molaire) | | 0,72 | |

## Revendications

1) Procédé pour l'obtention d'oxyde de carbone à partir d'une source carbonée par réduction par l'hydrogène selon lequel on introduit une source carbonée, de l'hydrogène et de l'oxygène dans une première zone A par combustion in situ, à une température d'au moins 800 °C en évitant la formation d'oxydes de carbone en-dessous de 800 °C caractérisée par le fait que l'on réalise un micro-mélange des réactifs en formant un écoulement hélicoïdal symétrique avec au moins l'un des réactifs amené sous forme gazeuse et en introduisant les autres réactifs à l'intérieur de la zone délimitée par l'écoulement hélicoïdal, puisque l'on provoque un refroidissement brutal dans une deuxième zone B par l'introduction d'un liquide froid de manière à bloquer l'évolution de l'équilibre dans cette zone B et à maintenir ainsi les gaz dans la composition atteinte à la sortie de la zone A.

2) Procédé selon la revendication 1, caractérisé par le fait que l'on introduit du $CO_2$ dans la zone A comme diluant thermique.

3) Procédé selon l'une des revendications 1 à 2, caractérisé par le fait que l'on introduit du $CO_2$ dans la zone A comme source carbonée.

4) Procédé selon l'une des revendications 1 à 3, caractérisé par le fait que l'on introduit un excès d'hydrogène par rapport au $CO_2$, excès qui est brûlé "in situ".

5) Procédé selon l'une des revendications 1 à 4, caractérisé par le fait que l'on forme un écoulement hélicoïdal symétrique avec au moins l'un des réactifs gazeux, l'on introduit l'autre (ou les autres) réactif(s) à l'intérieur de la zone délimitée par l'écoulement hélicoïdal symétrique, l'on amorce la réaction grâce à un moyen d'allumage et l'on soumet le milieu réactionnel à une trempe brutale à la sortie de l'écoulement hélicoïdal symétrique.

6) Procédé selon l'une des revendications 1 à 5, caractérisé par le fait que la différence entre la pression sur la phase formant l'écoulement hélicoïdal symétrique et la pression régnant en aval du système est inférieure à $10^5$ Pa lorsque cette dernière est voisine de la pression atmosphérique.

7) Dispositif pour la mise en oeuvre du procédé selon l'une des revendications 1 à 6, caractérisé par le fait qu'il comprend une enceinte tubulaire (1), une chemise perforée (2) définissant un espace annulaire (3), un convergent définissant un passage restreint (4), un moyen d'introduction d'une phase fluide (5) dans la zone du passage restreint, une chambre (6), au moins une entrée tangentielle (7), débouchant dans l'espace annulaire (3), au moins une autre entrée non tangentielle (8) et un moyen d'allumage (9).

8) Application du procédé selon l'une des revendications 1 à 6 à la fabrication d'un gaz de synthèse.

9) Application du procédé selon l'une des revendications 1 à 6 à la fabrication d'un combustible de synthèse.

## Claims

1. A process for producing carbon oxide from a carbonaceous source by reduction by means of hydrogen wherein a carbonaceous source, hydrogen and oxygen are introduced into a first zone A by combustion in situ, at a temperature of at least 800°C, while avoiding the formation of carbon oxides below 800°C, characterised by producing a micro-mixture of the reactants by forming a symmetrical helicoidal flow with at least one of the reactants which is supplied in gaseous form and by introducing the other reactants within the zone defined by the helicoidal flow, and then causing abrupt cooling in a second zone B by the introduction of a cold liquid so as to block the evolution of the equilibrium in said zone B and thus to keep the gases in the composition attained at the exit of zone A.

2. A process according to claim 1 characterised in that $CO_2$ is introduced into the zone A as a thermal diluent.

3. A process according to one of claims 1 and 2 characterised in that $CO_2$ is introduced into the zone A as a carbonaceous source.

4. A process according to one of claims 1 to 3 characterised in that an excess of hydrogen with respect to the $CO_2$ is introduced, the excess being burnt in situ.

5. A process according to one of claims 1 to 4 characterised by forming a symmetrical helicoidal flow with at least one of the gaseous reactants, introducing the other reactant or reactants within the zone defined by the symmetrical helicoidal flow, starting the reaction by virtue of an ignition means and subjecting the reaction medium to an abrupt quenching operation at the exit of the symmetrical helicoidal flow.

6. A process according to one of claims 1 to 5 characterised in that the difference between the pressure on the phase forming the symmetrical helicoidal flow and the pressure obtained downstream of the system is less than $10^5$ Pa when the latter is close to atmospheric pressure.

7. Apparatus for carrying out the process according to one of claims 1 to 6 characterised in that it comprises a tubular enclosure (1), a perforated sleeve (2) defining an annular space (3), a convergent portion defining a restricted passage (4), a means (5) for introducing a fluid phase into the zone of the restricted passage, a chamber (6), at least one tangential inlet (7) opening into the annular space (3), at least one other non-tangential inlet (8), and an ignition means (9).

8. Use of the process according to one of claims 1 to 6 for the production of a synthesis gas.

9. Use of the process according to one of claims 1 to 6 for the production of a synthesis fuel.

**Patentansprüche**

1. Verfahren zur Herstellung von Kohlenoxid, ausgehend von einem kohlenstoffhaltigen Ausgangsmaterial, durch Reduktion mit Wasserstoff, bei dem ein kohlenstoffhaltiges Ausgangsmaterial, Wasserstoff und Sauerstoff in eine erste Zone A eingebracht wird mittels Verbrennung in situ bei einer Temperatur von mindestens 800°C unter Vermeidung der Bildung von Kohlenoxiden unterhalb 800°C, dadurch gekennzeichnet, daß man ein Mikro-Gemisch der Reaktionspartner herstellt, indem man eine symmetrische schraubenförmige Strömung mit mindestens einem der Reaktionspartner, gasförmig zugeführt, erzeugt und die anderen Reaktionspartner in das Innere der von der schraubenförmigen Strömung begrenzten Zone einbringt, darauf in einer zweiten Zone B durch Einbringen einer kalten Flüssigkeit eine plötzliche Abkühlung bewirkt derart, daß die Herstellung des Gleichgewichtes in dieser Zone B blockiert wird und so die Gase in der beim Austritt aus der Zone A erreichten Zusammensetzung gehalten werden.

2. Verfahren nach Anspruch 1, dadurch gekennzeichnet, daß man in die Zone A $CO_2$ als thermisches Verdünnungsmittel einbringt.

3. Verfahren nach Anspruch 1 oder 2, dadurch gekennzeichnet, daß man in die Zone A $CO_2$ als kohlenstoffhaltiges Ausgangsmaterial einbringt.

4. Verfahren nach einem der Ansprüche 1 bis 3, dadurch gekennzeichnet, daß man, bezogen auf $CO_2$, Wasserstoff im Überschuß einbringt und daß der Wasserstoff in situ verbrannt wird.

5. Verfahren nach einem der Ansprüche 1 bis 4, dadurch gekennzeichnet, daß man eine symmetrische schraubenförmige Strömung mit mindestens einem der gasförmigen Reaktionspartner erzeugt, den anderen (oder die anderen) Reaktionspartner in das Innere der durch die symmetrische schraubenförmige Strömung begrenzten Zone einbringt, die Reaktion mit Hilfe einer Zündvorrichtung startet und das Reaktionsmedium am Ausgang der symmetrischen schraubenförmigen Strömung plötzlich abschreckt.

6. Verfahren nach einem der Ansprüche 1 bis 5, dadurch gekennzeichnet, daß der Unterschied zwischen dem Druck auf die Phase, die die symmetrische schraubenförmige Strömung bildet, und dem Druck, der in Strömungsrichtung unterhalb des Systems herrscht, weniger als $10^5$ Pa beträgt, wenn dieser letztere (Druck) nahe Atmosphärendruck ist.

7. Vorrichtung zur Durchführung des Verfahrens nach einem der Ansprüche 1 bis 6, dadurch gekennzeichnet, daß sie einen rohrförmigen Raum (1), einen perforierten Mantel (2), der einen Ringraum (3) definiert, einen Mischrohrkopf, der einen verengten Durchtritt (4) definiert, ein Mittel zum Einbringen einer fließfähigen Phase (5) in den Bereich des verengten Durchtritts, eine Kammer (6), mindestens einen tangentialen Eintritt (7), der in den Ringraum (3) mündet, mindestens einen weiteren nichttangentialen Eintritt (8) und eine Zündvorrichtung (9) umfaßt.

8. Anwendung des Verfahrens nach einem der Ansprüche 1 bis 6 zur Herstellung eines Synthesegases.

9. Anwendung des Verfahrens nach einem der Ansprüche bis 6 zur Herstellung eines synthetischen Brennstoffes.

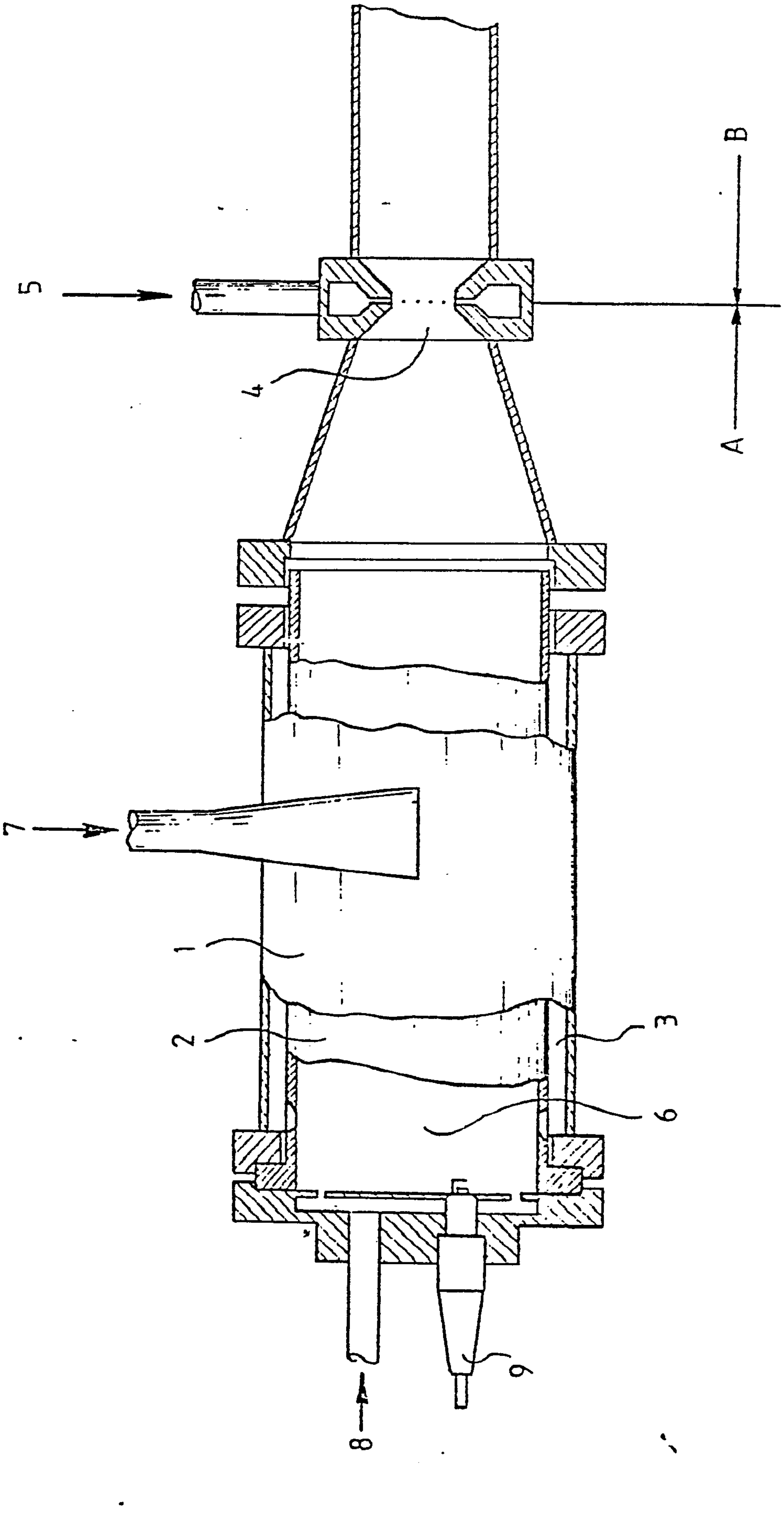


FIG 1

FIG. 2